(19) Europäisches Patentamt
European Patent Office
Office européen des brevets

(11) **EP 4 355 590 B1**

(12) **EUROPEAN PATENT SPECIFICATION**

(45) Date of publication and mention
of the grant of the patent:
**08.07.2026  Bulletin 2026/28**

(21) Application number: **22825985.9**

(22) Date of filing: **20.05.2022**

(51) International Patent Classification (IPC):
**B60C 7/14** *(2006.01)*

(52) Cooperative Patent Classification (CPC):
**B60C 7/146**

(86) International application number:
**PCT/US2022/072454**

(87) International publication number:
**WO 2022/266572 (22.12.2022 Gazette 2022/51)**

(54) **NON-PNEUMATIC TIRE HAVING BALANCED SPOKE STIFFNESSES**

LUFTLOSER REIFEN MIT AUSGEGLICHENEN SPEICHENSTEIFIGKEITEN

PNEU SANS AIRE AYANT DES INDICES DE RIGIDITÉ DE RAYON ÉQUILIBRÉS

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority:   **18.06.2021   US 202163212202 P**

(43) Date of publication of application:
**24.04.2024   Bulletin 2024/17**

(73) Proprietor: **Bridgestone Americas Tire
Operations, LLC
Nashville, TN 37201 (US)**

(72) Inventors:
• **RIMAI, Benjamin E.**
**Copley, Ohio 44321 (US)**
• **PLOTNER, Bradley S.**
**Canton, Ohio 44708 (US)**
• **KUMAR, Prashant**
**Stow, Ohio 44224 (US)**

(74) Representative: **Marks & Clerk LLP
15 Fetter Lane
London EC4A 1BW (GB)**

(56) References cited:
WO-A1-2020/076507   WO-A1-2020/142386
WO-A1-2020/204892   KR-A- 20060 033 906
US-A1- 2009 294 000   US-A1- 2020 223 249
US-A1- 2021 039 431

• ANONYMOUS: "10x16.5 Michelin X TWEEL SSL
All Terrain Skid Steer Tire and Wheel", 10 April
2019 (2019-04-10), XP093254553, Retrieved from
the Internet <URL:https://web.archive.org/web/
20190410000243/https://www.petestirestore.
com/
10x165-Michelin-X-TWEEL-SSL-All-Terrain-Skid-
Steer-Tire-and-Wheel_p_11443.html>
• MICHELINAG.COM: "MICHELIN   AGRICULTURE
AND COMPACT EQUIPMENT TIRES Technical
data book 2019", 1 February 2021 (2021-02-01),
XP093254570, Retrieved from the Internet
<URL:https://agtiretalk.com/wp-content/
uploads/2021/02/
2019_AG_Databook_02-02-21_Update.pdf>
• A.M. ABOUL-YAZID, M.A.A. EMAM, S. SHAABAN,
M.A. EL-NASHAR: "EFFECT OF SPOKES
STRUCTURES ON CHARACTERISTICS
PERFORMANCE OF NON-PNEUMATIC TIRES",
INTERNATIONAL JOURNAL OF AUTOMOTIVE
AND MECHANICAL ENGINEERING, vol. 11, 30
June 2015 (2015-06-30), pages 2212 - 2223,
XP055585272, ISSN: 2229-8649, DOI: 10.15282/
ijame.11.2015.4.0185
• LIANG CHEN; WEI WEI; MOUSAVI HODA; CHEN
KUN; ASAFO-DUHO BENTIL; WANG GUOLIN:
"Investigation on static grounding analysis
model of non-pneumatic tire with nonlinear
spokes", AIP ADVANCES, vol. 11, no. 1, 5
January 2021 (2021-01-05), pages 1 - 10,
XP012252707, DOI: 10.1063/5.0027335

**EP 4 355 590 B1**

**Description**

FIELD OF INVENTION

The present disclosure relates to a non-pneumatic tire. More particularly, the present disclosure relates to a non-pneumatic tire having balanced tensile and compressive spoke stiffness to distribute a load on the tire.

BACKGROUND

Various tire constructions have been developed that enable a tire to run in an uninflated or underinflated condition. Non-pneumatic tires do not require inflation, while "run flat" tires may continue to operate after being punctured and becoming partially or completely depressurized, for extended periods of time and at relatively high speeds. Non-pneumatic tires may include support structure, such as spokes or webbing that connects a lower ring to an upper ring. Among other design parameters, varying the tension stiffness and compression stiffness of each spoke affects non-pneumatic tire performance.

Tires with spokes having a low tension stiffness and a high compression stiffness are known as "bottom loading" tires. These tires carry a majority of a load in compression. While providing good load carrying characteristics, bottom loading tires may be deficient in regard to impact absorption performance because the spokes, due to their high compression stiffness, have a limited ability to "give" during the occurrence of an impact event. This may result in a tire with poor ride quality characteristics.

Tires with spokes having a high tension stiffness and a low compression stiffness are known as "top loading" tires. These tires carry a majority of a load in tension. While providing improved impact absorption performance over bottom loading tires, the specific tension and compression values of the spokes in the overall arrangement of top loading tires may generate undesirably high stresses or strains in tire components. Furthermore, at any given moment during rotation of the top loading tire, spokes located in the top half of the tire have a net upward pull, while spokes located in the bottom half of the tire may have a net downward pull. Consequently, the tire must be designed not only to carry a rated load, but must also be designed to overcome the downward pull of the spokes located in the bottom half of the tire. This exacerbates the aforementioned top loading tire design issue regarding the generation of undesirably high stresses or strains in tire components.

Thus, it is desired to provide a non-pneumatic tire that provides acceptable impact absorption performance while also having acceptable stress and strains in tire components. Attention is drawn to the disclosure of WO2020/142386A1 which according to its abstract discloses a non-pneumatic wheel (50) having a non-pneumatic tire (51) removably attached to a hub (52). The non-pneumatic wheel has an inner ring with an inner surface (70) that slips over the outer surface (80) of the hub and is retained by an interference fit. The interference fit creates an asymmetric force in an axial direction preventing separation of the hub from the tire.

SUMMARY OF THE INVENTION

According to the present invention, a method of manufacturing a non-pneumatic tire is provided as claimed in claim 1.

BRIEF DESCRIPTION OF DRAWINGS

In the accompanying drawings, structures are illustrated that, together with the detailed description provided below, describe exemplary embodiments of the claimed invention. Like elements are identified with the same reference numerals. It should be understood that elements shown as a single component may be replaced with multiple components, and elements shown as multiple components may be replaced with a single component. The drawings are not to scale and the proportion of certain elements may be exaggerated for the purpose of illustration.

Figure 1 is a front view of one embodiment of a non-pneumatic tire,
Figure 2 is an enlarged partial front view of the non-pneumatic tire of Figure 1,
Figure 3 is a cross-sectional view of the non-pneumatic tire of Figure 2 along 3-3,
Figure 4 is a partial front view of an alternative embodiment of a non-pneumatic tire of an alternative embodiment,
Figure 5a is a schematic drawing showing a front view of a testing arrangement for determining tension stiffness of a spoke,
Figure 5b is schematic drawing showing a front view of a testing arrangement for determining compression stiffness of a spoke, and
Figure 5c is a graph showing the relationship between spoke deflection and spoke force.

DETAILED DESCRIPTION

The following includes definitions of selected terms employed herein. The definitions include various examples or forms of components that fall within the scope of a term and that may be used for implementation. The examples are not intended to be limiting. Both singular and plural forms of terms may be within the definitions.

"Axial" and "axially" refer to a direction that is parallel to the axis of rotation of a tire.

"Circumferential" and "circumferentially" refer to a direction extending along the perimeter of the surface of the tread perpendicular to the axial direction.

"Radial" and "radially" refer to a direction perpendicular to the axis of rotation of a tire.

"Tread" as used herein, refers to that portion of the tire that comes into contact with the road or ground under normal inflation and normal load.

While similar terms used in the following descriptions describe common tire components, it should be understood that because the terms carry slightly different connotations, one of ordinary skill in the art would not consider any one of the following terms to be purely interchangeable with another term used to describe a common tire component.

Directions are stated herein with reference to the axis of rotation of the tire. The terms "upward" and "upwardly" refer to a general direction towards the tread of the tire, whereas "downward" and "downwardly" refer to the general direction towards the axis of rotation of the tire. Thus, when relative directional terms such as "upper" and "lower" or "top" and "bottom" are used in connection with an element, the "upper" or "top" element is spaced closer to the tread than the "lower" or "bottom" element. Additionally, when relative directional terms such as "above" or "below" are used in connection with an element, an element that is "above" another element is closer to the tread than the other element.

The terms "inward" and "inwardly" refer to a general direction towards the equatorial plane of the tire, whereas "outward" and "outwardly" refer to a general direction away from the equatorial plane of the tire and towards the side of the tire. Thus, when relative directional terms such as "inner" and "outer" are used in connection with an element, the "inner" element is spaced closer to the equatorial plane of the tire than the "outer" element.

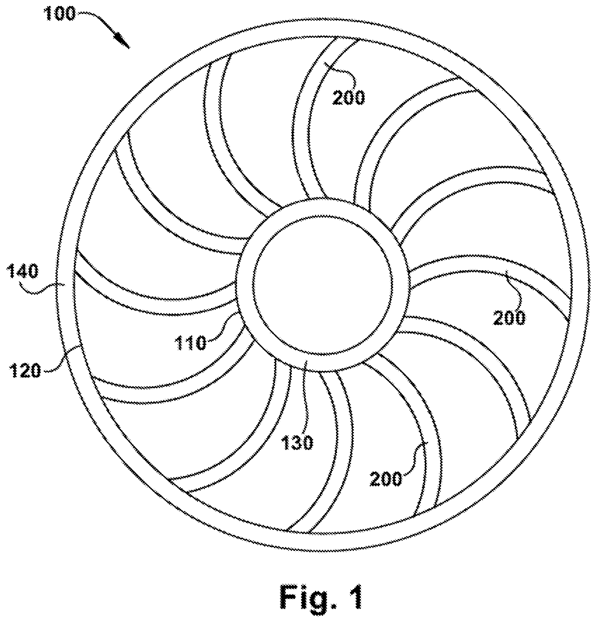

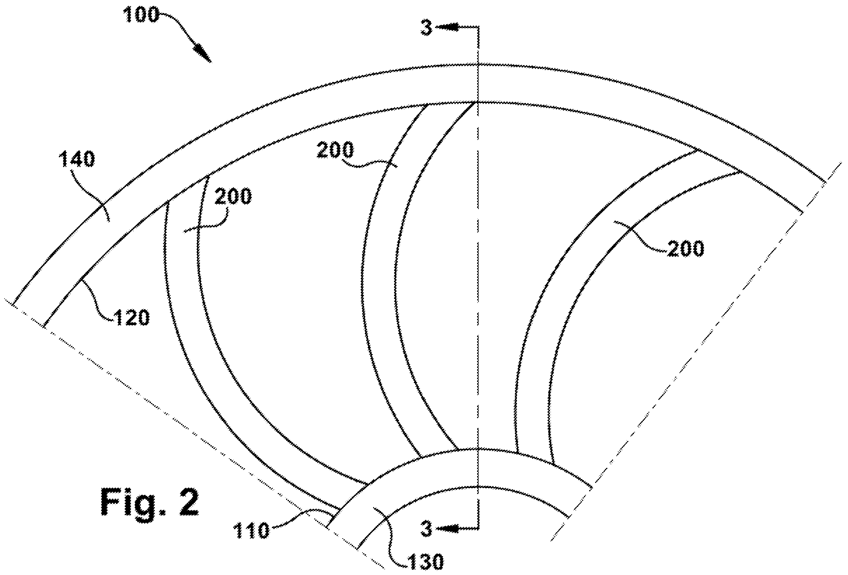

**Figures 1** and **2** are front views of one embodiment of a non-pneumatic tire **100**. The non-pneumatic tire **100** includes a lower ring **110** having a first diameter and an upper ring **120** having a second diameter greater than the first diameter. Each of the lower ring **110** and the upper ring **120** extend in an axial direction to define a tire width. The upper ring **120** is substantially coaxial with the lower ring **110**. The lower ring **110** is attached to a hub **130**. The hub **130** may be used to attach the non-pneumatic tire **100** to a vehicle, for example. In alternative embodiments, the hub may be omitted.

A circumferential tread **140** is disposed about the upper ring **120**. The tread **140** may include tread elements such as grooves, ribs, blocks, lugs, sipes, studs, and other elements. A shear band, shear element, or reinforcement structure (not shown) may be disposed between the upper ring **120** and the tread **140**. In alternative embodiments, the tread may be omitted and tread elements may be formed directly on the upper ring.

A plurality of spokes **200** extend between and interconnect the lower ring **110** and the upper ring **120**. In the illustrated embodiment, the design of each one of the plurality of spokes **200** is substantially identical. Accordingly, further description of the plurality of spokes **200** will be made with reference to a single spoke. However, it should be understood that in alternative embodiments, the geometries of different spokes may vary. In other alternative embodiments, webbing may be used to interconnect the lower ring and the upper ring.

Each one of the spokes **200** extends between a first end **205** and a second end **210** along a generally radial direction of the non-pneumatic tire **100**. The first end **205** is attached to the lower ring **110**. The second end **210** is attached to the upper ring **120**. The spoke **200** also extends between a first edge **215** and a second edge **220** along a generally axial direction of the non-pneumatic tire **100** to define a spoke width. In the illustrated embodiment, the width of the spoke **200** is slightly less than the width of the lower ring **110** and the upper ring **120**. In alternative embodiments, the spoke may have a width that is equal to the lower ring or the upper ring, or the spoke may have a width that is greater than the lower ring or the upper ring.

Each spoke **200** has a first stiffness in tension, $k_t$, which may be referred to as a tension stiffness. Each spoke **200** also has a second stiffness in compression, $k_c$, which may be referred to as a compression stiffness. The tension stiffness $k_t$ and compression stiffness $k_c$ of each spoke **200** affects the performance characteristics of the non-pneumatic tire **100**.

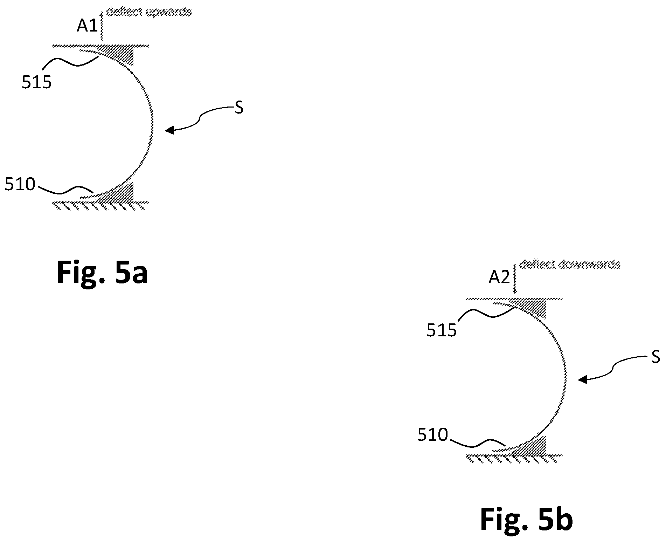

**Figure 5a** is a schematic drawing showing a front view of a testing arrangement for determining tension stiffness $k_t$ of a spoke. A spoke sample **S** has a first end **510** that is held stationary and a second end **515** that is free to move relative to the first end **510**. A load is applied to the second end **515** of the spoke sample **S** in a first direction, indicated by arrow **A1.** This load causes the second end **515** of the spoke S to deflect relative to the first end **510** by a tension distance $d_t$ (not shown in this view). The load likewise creates a tension force $f_t$ on the spoke sample S generates as the second end **515** moves the tension distance $d_t$.

**Figure 5b** is a schematic drawing showing a front view of a testing arrangement for determining compression stiffness $k_c$ of the spoke sample S. In this arrangement, the load applied to the second end **515** of the spoke sample S is in a second direction, indicated by arrow **A2,** which is opposite the first direction shown in **Figure 5a**. The load causes the second end **515** of the spoke sample S to be deflected relative to the first end **510** by a compression distance $d_c$ (not shown in this view). The load also creates a compression force $f_c$ on the spoke sample S as the second end **515** moves the compression distance $d_t$.

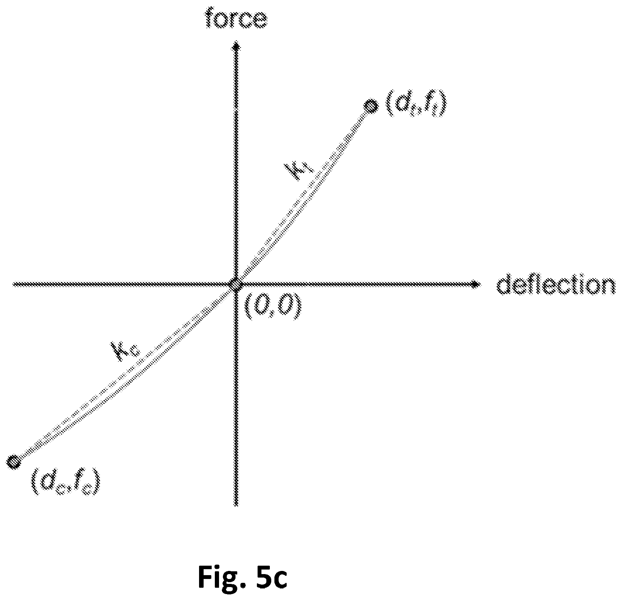

The graph shown in **Figure 5c** shows the relationship between spoke deflection and spoke force, with deflection being plotted along the x-axis and force being plotted along the y-axis. The right side of the graph is a plot of the tension force $f_t$ and the tension distance $d_t$, while the left side of the graph is a plot of the compression force $f_c$ and the compression distance $d_c$. Tension stiffness $k_t$ is determined by measuring the slope of a line connecting the point (0, 0) to the point ($d_t$, $f_t$). Compression stiffness $k_c$ is determined by measuring the slope of a line connecting the point (0, 0) to the point ($d_c$, $f_c$).

Known non-pneumatic tires may generally be categorized as "bottom loading" or "top loading." Bottom loading tires carry load predominantly by compression of the tire between the underlying surface on which the tire rests and the point where the load is applied to the tire, with a small fraction of the spokes located near the underlying surface carrying a majority of the load at any given moment during rotation of the tire. As such, compression stiffness of the spokes in bottom loading tires is a primary design factor, while tension stiffness of the spokes is less significant. Bottom loading tires can provide good load carrying characteristics, but may provide poor impact absorption performance.

In comparison, top loading tires carry load predominantly through the use of a hoop-like structure. Unlike a bottom loading tire where a small fraction of the spokes carry a majority of the load, the hoop-like structure of top loading tires distributes a load more evenly to all spokes in the tire. As such, both compression stiffness and tension stiffness of the spokes of top loading tires are significant design factors. In certain top loading tire arrangements, the tension stiffness of the spokes can be orders-of-magnitude higher than the compression stiffness of the spokes, which can create an imbalance of forces in the tire. Thus, while top loading tires can provide good impact absorption performance, top loading tires may suffer from undesirably high stresses or strains in tire components because of this imbalance of forces.

The present disclosure identifies equations and values that can be used to design a non-pneumatic tire that overcomes the aforementioned issues to provide a non-pneumatic tire having acceptable impact absorption performance while also having acceptable stresses and strains in tire components. Specifically, the present disclosure identifies equations and values that can be used to calculate ideal tension stiffness $k_{t,degree}$ and ideal compression stiffness $k_{c,degree}$ values for a tire of a desired width and a desired load capacity, with the ideal tension stiffness $k_{t,degree}$ and ideal compression stiffness $k_{c,degree}$ values each being expressed in spoke stiffness per degree and having units of $\frac{N}{mm}/°$.

Ideal tension stiffness $k_{t,degree}$ and ideal compression stiffness $k_{c,degree}$ values are most appropriately expressed in terms of spoke stiffness per degree $(\frac{N}{mm}/°)$ because the performance characteristics of the non-pneumatic tire 200 are affected by the total number of spokes **20**. Generally speaking, reducing the total number of spokes requires an increase in compression and tension stiffness of each spoke, while increasing the total number of spokes requires a decrease in compression and tension stiffness of each spoke. For example, a tire is initially designed with 60 spokes and provides baseline performance characteristics. Starting from this initial design, if the total number of spokes is reduced, the tension and compression stiffness of each spoke must be increased to compensate for the spoke reduction in order to maintain the baseline performance characteristics. If the total number of spokes is increased from the initial design, the tension and compression stiffness of each spoke must be decreased to compensate for the spoke addition in order to maintain the baseline performance characteristics.

With the foregoing in mind, the following equations and values can be used to calculate ideal tension stiffness $k_{t,degree}$ and ideal compression stiffness $k_{c,degree}$ values expressed in terms of spoke stiffness per degree:

$$11 \leq k_{t,ref} \leq 150 \left(\frac{N}{mm}\right)/°$$

$$11 \leq k_{c,ref} \leq 100 \left(\frac{N}{mm}\right)/°$$

$$w_{ref} = 300 \, mm$$

$$f_{ref} = 22,200 \, N$$

$$k_{t,degree} = k_{t,ref} \left(\frac{w_{ref}}{w}\right)\left(\frac{f}{f_{ref}}\right)$$

$$k_{c,degree} = k_{c,ref} \left(\frac{w_{ref}}{w}\right)\left(\frac{f}{f_{ref}}\right)$$

The first step in calculating ideal tension stiffness $k_{t,degree}$ and ideal compression stiffness $k_{c,degree}$ values is modeling a model tire to optimize a reference tension stiffness $k_{t,ref}$ and a reference compression stiffness $k_{c,ref}$ values. The modeling may be performed using, for example, finite element analysis. This modeling is performed using a model tire with a specific model width $w_{ref}$ and a specific model load capacity $f_{ref}$. In one example embodiment, the model tire has a width $w_{ref}$ of 300 mm and a load capacity $f_{ref}$ of 22,200 N.

In modeling the tire, the designer takes into consideration the intended application for the non-pneumatic tire. Increasing the reference compression stiffness $k_{c,ref}$ provides a tire with a stiffer ride and relatively smaller footprint, while decreasing the reference compression stiffness $k_{c,ref}$ provides a tire with a softer ride and relatively larger footprint. Increasing and decreasing the reference tension stiffness $k_{t,ref}$ provides similar resultant changes. Generally speaking, however, it has been found that a reference tension stiffness $k_{t,ref}$ in a range of 11 to 150 $\frac{N}{mm}/°$ and a reference compression stiffness $k_{c,ref}$ in a range of 11 to 100 $\frac{N}{mm}/°$ provides desirable non-pneumatic tire performance characteristics. More preferably, a tire is provided with a reference tension stiffness $k_{t,ref}$ in a range of 17 to 140 $\frac{N}{mm}/°$ and a reference compression stiffness $k_{c,ref}$ in a range of 11 to 70 $\frac{N}{mm}/°$. Even more preferably, a tire is provided with a reference tension stiffness $k_{t,ref}$ in a range of 17 to 70 $\frac{N}{mm}/°$ and a reference compression stiffness $k_{c,ref}$ in a range of 11 to 35 $\frac{N}{mm}/°$. Most preferably, a tire is provided with a reference tension stiffness $k_{t,ref}$ in a range of 17 to 35 $\frac{N}{mm}/°$ and a reference compression stiffness $k_{c,ref}$ in a range of 17 to 35 $\frac{N}{mm}/°$.

Regardless of the specific values for reference tension stiffness $k_{t,ref}$ and reference compression stiffness $k_{c,ref}$, it has also been found that providing a reference tension stiffness $k_{t,ref}$ to reference compression stiffness $k_{c,ref}$ ratio in the range of 0.3:1 to 8:1 results in desirable non-pneumatic tire performance characteristics. More preferably, a tire is provided with a reference tension stiffness $k_{t,ref}$ to reference compression stiffness $k_{c,ref}$ ratio in the range of 0.5:1 to 8:1. Most preferably, a tire is provided with a reference tension stiffness $k_{t,ref}$ to reference compression stiffness $k_{c,ref}$ ratio in the range of 0.5:1 to 1:1. In instances where $k_{t,ref}$ is less than 1, the spokes of the tire may carry a majority of the load in compression. The tire structure, however, is such that force is transmitted around a circumference of the tire so that all of the spokes play a significant role in carrying a load, as is the case in top loading tires.

With the foregoing guidelines being established, the exact values for the reference tension stiffness $k_{t,ref}$ and the reference compression stiffness $k_{c,ref}$ are selected based on the modeling of the model tire and desired performance characteristics. The reference tension stiffness $k_{t,ref}$ and the reference compression stiffness $k_{c,ref}$ can then be entered into the equations to calculate the ideal tension stiffness $k_{t,degree}$ and ideal compression stiffness $k_{c,degree}$ values for a desired tire design having a first design width and a first design load capacity. The width of the tire being designed (i.e., first design width) is designated by w, measured in millimeters, and assumes that the spoke, the lower ring, and the upper ring are all the same width. The design load capacity of the tire being designed (i.e., first design load capacity) is designated by f and is measured in Newtons.

In one non-limiting example, a model width $w_{ref}$ of 300 mm and a model load capacity $f_{ref}$ of 22,200 N are used again in adjusting reference tension stiffness $k_{t,ref}$ and the reference compression stiffness $k_{c,ref}$ values for the modeled tire to arrive at the ideal tension stiffness $k_{t,degree}$ and the ideal compression stiffness $k_{c,degree}$ values for the tire being designed. Consequently, the equations becoming the following:

$$k_{t,degree} = k_{t,ref} \left( \frac{f}{w} \right) (0.0135)$$

$$k_{c,degree} = k_{c,ref} \left( \frac{f}{w} \right) (0.0135)$$

In this example, once the initial modeling is performed using a tire with a model width $w_{ref}$ of 300 mm and a model load capacity $f_{ref}$ of 22,200 N, ideal tension stiffness $k_{t,degree}$ and ideal compression stiffness $k_{c,degree}$ values can quickly be adjusted for different tire widths and different tire design load capacities. Accordingly, once the ideal tension stiffness $k_{t,degree}$ and the ideal compression stiffness $k_{c,degree}$ values are calculated for the tire having a first design width and a first design load capacity, the equations can again be used to calculate the ideal tension stiffness $k_{t,degree}$ and the ideal compression stiffness $k_{c,degree}$ values for a tire having a second design width and a second design load capacity. First, second, and subsequent tire designs can thus be quickly designed.

After the ideal tension stiffness $k_{t,degree}$ and the ideal compression stiffness $k_{c,degree}$ are calculated, the specific tension stiffness $k_{t,specific}$ and the specific compression stiffness $k_{c,specific}$ of each spoke can be determined by using the following equations:

$$k_{t,specific} = k_{t,degree} \left( \frac{360°}{n} \right)$$

$$k_{c,specific} = k_{c,degree} \left( \frac{360°}{n} \right)$$

According to these equations, the specific tension stiffness $k_{t,specific}$ and the specific compression stiffness $k_{c,specific}$ of each spoke can be determined by multiplying each of the ideal tension stiffness $k_{t,degree}$ and the ideal compression stiffness $k_{c,degree}$ by (360°/n), where n is the total number of spokes in the tire being designed. Performing this operation will provide the specific tension stiffness $k_{t,specific}$ and the specific compression stiffness $k_{c,specific}$ values of each spoke, expressed in N/mm. Accordingly, specific tension stiffness $k_{t,specific}$ and specific compression stiffness $A_{c,specifc}$ can quickly be adjusted for tires with different number of spokes.

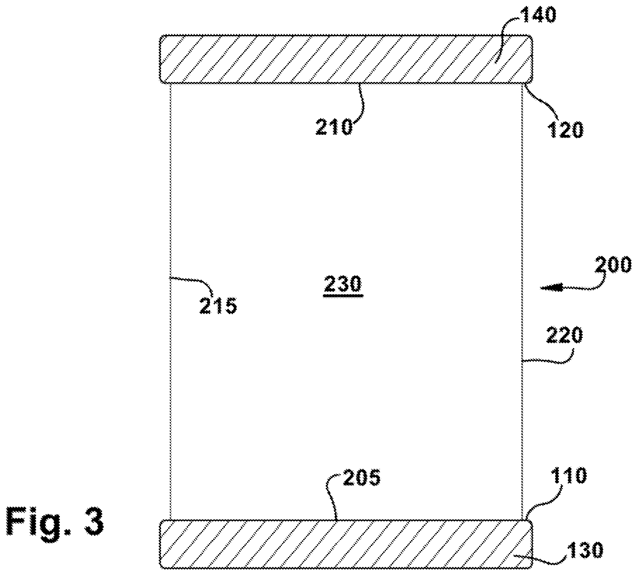

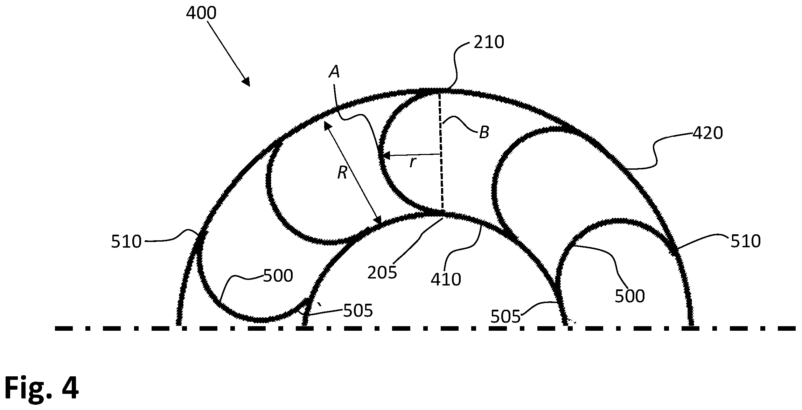

Various spoke designs may provide the desired specific tension stiffness $k_{t,specific}$ and specific compression stiffness $k_{c,specific}$ calculated according to the equations above, and may be achieved through a combination of geometry, material selection, and reinforcements, for example. **Figure 4** shows part of a non-pneumatic tire **400** in an unloaded condition and having an exemplary spoke design that can provide the desired specific tension stiffness $k_{t,specific}$ and specific compression stiffness $k_{c,specifc}$. The non-pneumatic tire **400** of **Figure 4** is substantially similar to the non-pneumatic tire **100** of **Figures 1-3.** Thus, the description of the tire of **Figure 4** will be abbreviated, and like features will be identified by like numerals increased by a factor of "300."

The non-pneumatic tire **400** includes a lower ring **410** having a first diameter and an upper ring **420** having a second diameter greater than the first diameter. A distance between the lower ring **410** and the upper ring **420** is denoted by $R$. The upper ring **420** is substantially coaxial with the lower ring **410**. A plurality of spokes **500** extend between and interconnect the lower ring **410** and the upper ring **420**. The design of each one of the plurality of spokes **500** is substantially identical. Accordingly, further description of the plurality of spokes **500** will be made with reference to a single spoke.

Each one of the spokes **500** is substantially C-shaped and extends between a first end **505** and a second end **510** along a generally radial direction of the non-pneumatic tire **400**. The first end **505** is attached to the lower ring **410**. The second end **510** is attached to the upper ring **420**. A straight line drawn between the attachment point of the first end **505** and the lower ring **410** may be referred to as a base and is denoted by **B**. An apex **A** of the C-shaped spoke is offset from the base **B** along a circumferential direction of the tire by a distance **r**.

It has been found that a spoke **500** having the desired specific tension stiffness $k_{t,specific}$ and compression stiffness $k_{c,specific}$ calculated using the aforementioned equations can be designed using the following equation:

$$ r = (0.5)R $$

In this equation, the distance $R$ between the lower ring **410** and the upper ring 420 can be calculated for a non-pneumatic tire **400** having a known inner and outer diameters. According to one example embodiment, it has been found that multiplying the distance $R$ by (0.5) to calculate the offset distance $r$ provides desirable non-pneumatic tire performance characteristics. In other example embodiments, it has been found that multiplying the distance $R$ by values ranging from 0.5 to 2 provides acceptable non-pneumatic tire characteristics. In addition to providing a spoke having the desired specific tension stiffness $k_{t,specific}$ and specific compression stiffness $k_{c,specific}$, it has been found that the above equation also provides a spoke having approximately linear tension and compression behavior.

According to one example embodiment, the C-shaped spoke 500 is manufactured from steel with an elastic modulus of approximately 200 gigapascals, a thickness in the circumferential direction of 1.575 mm, and a width in the axial direction of 305 mm. These parameters may be varied without departing from the design objectives discussed above in regard to specific tension stiffness $k_{t,specific}$ and compression stiffness $k_{c,specific}$. For example, the spoke may be manufactured from carbon fiber reinforced polymers, glass reinforced polymers, plastics (thermoplastics or thermosets), and other metals such as stainless steel. As another example, the spokes may have a thickness of 1-25 mm and, more preferably, 1-10 mm. As yet another example, the spokes may have a width of 200-305 mm and, more preferably, 260-305 mm. It is appreciated that changing one design parameter may require changing another design parameter in order to maintain the desired design objectives in regard to specific tension stiffness $k_{t,specific}$ and compression stiffness $k_{c,specifc}$. For example, if the spoke is made from polymer rather than steel, it may be necessary to increase the thickness of the spoke to 23 mm, assuming the width of the spoke remains at 305 mm. As another example, if the width of the spoke is reduced, it may be necessary to increase the thickness of the spoke.

The foregoing spoke design is only one possibility for a design that provides the specific tension stiffness $k_{t,specifc}$ and compression stiffness $k_{c,specific}$ disclosed herein. Other spoke designs meeting the specific tension stiffness $k_{t,specific}$ and compression stiffness $k_{c,specific}$ design objectives are possible.

To the extent that the term "includes" or "including" is used in the specification or the claims, it is intended to be inclusive in a manner similar to the term "comprising" as that term is interpreted when employed as a transitional word in a claim. Furthermore, to the extent that the term "or" is employed (e.g., A or B) it is intended to mean "A or B or both." When the applicants intend to indicate "only A or B but not both" then the term "only A or B but not both" will be employed. Thus, use of the term "or" herein is the inclusive, and not the exclusive use. See, Bryan A. Garner, A Dictionary of Modern Legal Usage 624 (2d. Ed. 1995). Also, to the extent that the terms "in" or "into" are used in the specification or the claims, it is intended to additionally mean "on" or "onto." Furthermore, to the extent the term "connect" is used in the specification or claims, it is intended to mean not only "directly connected to," but also "indirectly connected to" such as connected through another component or components.

While the present application has been illustrated by the description of embodiments thereof, and while the embodiments have been described in considerable detail, it is not the intention of the applicants to restrict or in any way limit the scope of the appended claims to such detail. Additional advantages and modifications will readily appear to those skilled in the art. Therefore, the application, in its broader aspects, is not limited to the specific details, the representative apparatus and method, and illustrative examples shown and described.

**Claims**

1.  A method of manufacturing a non-pneumatic tire (100; 400), **characterized by** comprising the steps of:

    modeling a model tire having a model width and a model design load capacity;
    identifying desired performance characteristics of the model tire;
    identifying a reference tension stiffness value and a reference compression stiffness value of the model tire that achieve the desired performance characteristics based on the step of modeling, the reference tension stiffness value being greater than or equal to 11 and less than or equal to 150 $\frac{N}{mm}/°$ , the reference compression stiffness being greater than or equal to 11 and less than or equal to 100 $\frac{N}{mm}/°$ ;
    identifying a tire design different from the model tire, the tire design having a first design width and a first design load capacity:

    calculating a first ideal tension stiffness and a first ideal compression stiffness for the tire design by adjusting the reference tension stiffness value and the reference compression stiffness value identified during the step of identifying the reference tension stiffness value and the reference compression stiffness value of the model tire that achieve the desired performance characteristics;
    wherein the step of calculating the first ideal tension stiffness is calculated according to the equation:

    $$k_{t,degree} = k_{t,ref} \left(\frac{w_{ref}}{w}\right)\left(\frac{f}{f_{ref}}\right)$$

    wherein $k_{t.degree}$ is the ideal tension stiffness, $k_{t,ref}$ is the reference tension stiffness value identified during the step of identifying the reference tension stiffness value, $f$ is the first design load capacity, and w is the first design width, and
    the step of calculating the first ideal compression stiffness is calculated according to the equation:

    $$k_{c,degree} = k_{c,ref} \left(\frac{w_{ref}}{w}\right)\left(\frac{f}{f_{ref}}\right)$$

    wherein $k_{c.degree}$ is the ideal compression stiffness, $k_{c,ref}$ is the reference compression stiffness value identified during the step of identifying the reference compression stiffness value, $f$ is the first design load capacity, and w is the first design width; and
    producing a first non-pneumatic tire (100; 400) having the first design width and the first design capacity, and further having the first ideal tension stiffness and the first ideal compression stiffness calculated during the step of calculating.

2.  The method of manufacturing a non-pneumatic tire (100; 400) of claim 1, wherein the model width is 300 mm and the model design load capacity is 22,200 N.

3.  The method of manufacturing a non-pneumatic tire (100; 400) of claim 1, wherein the reference tension stiffness value to reference compression stiffness value is a ratio in the range of 0.3:1 to 8:1.

4.  The method of manufacturing a non-pneumatic tire (100; 400) of claim 1, wherein the step of producing includes providing a lower ring (110; 410) and an upper ring (120; 420), forming a plurality of C-shaped spokes (200; 500), and interconnecting the lower ring (110; 410) and the upper ring (120; 420) with the plurality of C-shaped spokes (200; 500).

5.  The method of manufacturing a non-pneumatic tire (100; 400) of claim 4, wherein the step of forming a plurality of C-shaped spokes (200; 500) includes offsetting an apex of each spoke from a base of each spoke (200; 500) in a circumferential direction of the non-pneumatic tire (100; 400) by a distance in the range of 0.5 to 2 times the difference between a diameter of the upper ring (120; 420) and a diameter of the lower ring (110; 410).

**Patentansprüche**

1.  Verfahren zum Herstellen eines luftlosen Reifens (100; 400),
    **dadurch gekennzeichnet, dass**
    es die Schritte umfasst:

    Modellieren eines Modellreifens, der eine Modellbreite und eine Modellaufbaubelastbarkeit aufweist;
    Identifizieren gewünschter Leistungsmerkmale des Modellreifens;
    Identifizieren eines Referenzzugsteifigkeitswerts und eines Referenzdrucksteifigkeitswerts des Modellreifens, die die gewünschten Leistungsmerkmale basierend auf dem Schritt des Modellierens erreichen, wobei der Referenzzugsteifigkeitswert größer als oder gleich 11 und kleiner als oder gleich 150 $\frac{N}{mm}/°$ ist, wobei die Referenzdrucksteifigkeit größer als oder gleich 11 und kleiner als oder gleich 100 $\frac{N}{mm}/°$ ist;

Identifizieren eines Reifenaufbaus, der sich von dem Modellreifen unterscheidet, wobei der Reifenaufbau eine erste Aufbaubreite und eine erste Aufbaubelastbarkeit aufweist;

Berechnen einer ersten idealen Zugsteifigkeit und einer ersten idealen Drucksteifigkeit für den Reifenaufbau durch Anpassen des Referenzzugsteifigkeitswerts und des Referenzdrucksteifigkeitswerts, die während des Schritts des Identifizierens des Referenzzugsteifigkeitswerts und des Referenzdrucksteifigkeitswerts des Modellreifens identifiziert werden, die die gewünschten Leistungsmerkmale erreichen;

wobei der Schritt des Berechnens der ersten idealen Zugsteifigkeit entsprechend der Gleichung berechnet wird:

$$K_{t,Grad} = K_{t,Ref}\left(\frac{W_{Ref}}{w}\right)\left(\frac{f}{f_{Ref}}\right)$$

wobei $k_{t,Grad}$ die ideale Zugsteifigkeit ist, $k_{t,Ref}$ der Referenzzugsteifigkeitswert ist, der während des Schritts des Identifizierens des Referenzzugsteifigkeitswerts identifiziert wird, $f$ die erste Aufbaubelastbarkeit ist und w die erste Aufbaubreite ist und

der Schritt des Berechnens der ersten idealen Drucksteifigkeit entsprechend der Gleichung berechnet wird:

$$K_{c,Grad} = Kc,Ref\left(\frac{W_{Ref}}{w}\right)\left(\frac{f}{f_{Ref}}\right)$$

wobei $k_{c,Grad}$ die ideale Drucksteifigkeit ist, $k_{t,Ref}$ der Referenzdrucksteifigkeitswert ist, der während des Schritts des Identifizierens des Referenzdrucksteifigkeitswerts identifiziert wird, $f$ die erste Aufbaubelastbarkeit ist und w die erste Aufbaubreite ist; und

Produzieren eines ersten luftlosen Reifens (100; 400), der die erste Aufbaubreite und die erste Aufbaukapazität aufweist, und ferner die erste ideale Zugsteifigkeit und die erste ideale Drucksteifigkeit aufweist, die während des Schritts des Berechnens berechnet werden.

2. Verfahren zum Herstellen eines luftlosen Reifens (100; 400) nach Anspruch 1, wobei die Modellbreite 300 mm beträgt und die Modellaufbaubelastbarkeit 22.200 N beträgt.

3. Verfahren zum Herstellen eines luftlosen Reifens (100; 400) nach Anspruch 1, wobei der Referenzzugsteifigkeitswert zu dem Referenzdrucksteifigkeitswert ein Verhältnis in dem Bereich von 0,3 : 1 bis 8 : 1 ist.

4. Verfahren zum Herstellen eines luftlosen Reifens (100; 400) nach Anspruch 1, wobei der Schritt des Produzierens ein Bereitstellen eines unteren Rings (110; 410) und eines oberen Rings (120; 420), ein Ausbilden einer Vielzahl von C-förmigen Speichen (200; 500) und ein Verbinden des unteren Rings (110; 410) und des oberen Rings (120; 420) mit der Vielzahl von C-förmigen Speichen (200; 500) einschließt.

5. Verfahren zum Herstellen eines luftlosen Reifens (100; 400) nach Anspruch 4, wobei der Schritt des Ausbildens einer Vielzahl von C-förmigen Speichen (200; 500) ein Versetzen eines Scheitelpunkts jeder Speiche von einer Basis jeder Speiche (200; 500) in einer Umfangsrichtung des luftlosen Reifens (100; 400) um eine Entfernung in dem Bereich von 0,5- bis 2-mal der Differenz zwischen einem Durchmesser des oberen Rings (120; 420) und einem Durchmesser des unteren Rings (110; 410) einschließt.

**Revendications**

1. Procédé de fabrication d'un pneu non pneumatique (100 ; 400),
   **caractérisé en ce que**
   il comprend les étapes consistant à :

   modéliser un pneu modèle ayant une largeur de modèle et une capacité de charge de conception de modèle ;
   identifier des caractéristiques de performance souhaitées du pneu modèle ;
   identifier une valeur de rigidité à la traction de référence et une valeur de rigidité à la compression de référence du pneu modèle qui atteignent les caractéristiques de performance souhaitées sur la base de l'étape de modélisation, la valeur de rigidité à la traction de référence étant supérieure ou égale à 11 et inférieure ou égale à 150 $\frac{N}{mm}/°$, la rigidité à la compression de référence étant supérieure ou égale à 11 et inférieure ou égale à 100 $\frac{N}{mm}/°$ ;

   identifier une conception de pneu différente du pneu modèle, la conception de pneu ayant une première largeur de conception et une première capacité de charge de conception ; calculer une première rigidité à la traction idéale et une première rigidité à la compression idéale pour la conception de pneu en ajustant la valeur de rigidité à la traction de référence et la valeur de rigidité à la compression de référence identifiées lors de l'étape consistant à identifier la valeur de rigidité à la traction de référence et la valeur de rigidité à la compression de référence du pneu modèle qui atteignent les caractéristiques de performance souhaitées ; dans lequel l'étape consistant à calculer la première rigidité à la traction idéale est calculée selon l'équation :

$$K_{t,degré} = K_{t,réf}\left(\frac{W_{réf}}{w}\right)\left(\frac{f}{f_{réf}}\right)$$

dans lequel $K_{t.degré}$ est la rigidité à la traction idéale, $k_{t.réf}$ est la valeur de rigidité à la traction de référence identifiée lors de l'étape consistant à identifier la valeur de rigidité à la traction de référence, $f$ est la première capacité de charge de conception, et w est la première largeur de conception, et l'étape consistant à calculer la première rigidité à la compression idéale est calculée selon l'équation :

$$K_{c,degré} = K_{c,réf}\left(\frac{W_{réf}}{w}\right)\left(\frac{f}{f_{réf}}\right)$$

dans lequel $k_{c.degré}$ est la rigidité à la compression idéale, $k_{c,réf}$ est la valeur de rigidité à la compression de référence identifiée lors de l'étape consistant à identifier la valeur de rigidité à la compression de référence, $f$ est la première capacité de charge de conception, et $w$ est la première largeur de conception ; et produire un premier pneu non pneumatique (100 ; 400) ayant la première largeur de conception et la première capacité de conception, et ayant en outre la première rigidité à la traction idéale et la première rigidité à la compression idéale calculées lors de l'étape de calcul.

2. Procédé de fabrication d'un pneu non pneumatique (100 ; 400) selon la revendication 1, dans lequel la largeur de modèle est de 300 mm et la capacité de charge de conception de modèle est de 22 200 N.

3. Procédé de fabrication d'un pneu non pneumatique (100 ; 400) selon la revendication 1, dans lequel un rapport entre la valeur de rigidité à la traction de référence et la valeur de rigidité à la compression de référence est compris dans la plage allant de 0,3:1 à 8:1.

4. Procédé de fabrication d'un pneu non pneumatique (100 ; 400) selon la revendication 1, dans lequel l'étape de production comporte la disposition d'un anneau inférieur (110 ; 410) et d'un anneau supérieur (120 ; 420), la formation d'une pluralité de rayons en forme de C (200 ; 500), et la liaison de l'anneau inférieur (110 ; 410) et de l'anneau supérieur (120 ; 420) avec la pluralité de rayons en forme de C (200 ; 500).

5. Procédé de fabrication d'un pneu non pneumatique (100 ; 400) selon la revendication 4, dans lequel l'étape de formation d'une pluralité de rayons en forme de C (200 ; 500) comporte le décalage d'un sommet de chaque rayon par rapport à une base de chaque rayon (200 ; 500) dans une direction circonférentielle du pneu non pneumatique (100 ; 400) d'une distance comprise dans la plage allant de 0,5 à 2 fois la différence entre un diamètre de l'anneau supérieur (120 ; 420) et un diamètre de l'anneau inférieur (110 ; 410).

**Fig. 1**

Fig. 2

Fig. 3

Fig. 4

**Fig. 5b**

**Fig. 5a**

**Fig. 5c**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020142386 A1